# EUROPEAN PATENT SPECIFICATION

(11) **EP 3 528 355 B1**
(45) Date of publication and mention of the grant of the patent: **10.04.2024**
(21) Application number: 19155471.6
(22) Date of filing: 05.02.2019
(51) Int. Cl.: H02G 3/12, H02G 3/14

(54) **FRAME FOR CLOSING ELECTRICAL AND/OR PLUMBING SERVICE BOXES PROVIDED WITH A COVER PANEL APPLIED SO AS TO ALLOW THE APPLICATION OF THE CLOSURE PANEL OF THE SAME ELECTRICAL SERVICE BOX**
RAHMEN ZUM SCHLIESSEN VON ELEKTRO- UND/ODER SANITÄRINSLLATIONSKÄSTEN, MIT EINER ABDECKUNG, DIE SO ANGEWENDET WIRD, DASS DIESE DIE ANWENDUNG DER VERSCHLUSSPLATTE DESSELBEN ELEKTRO-SERVICEKASTENS ERLAUBT
CADRE DE FERMETURE DE BOITES DE SERVICE ELECTRIQUE ET/OU DE PLOMBERIE MUNI D'UN PANNEAU DE COUVERTURE APPLIQUÉ AFIN DE PERMETTRE L'APPLICATION DU PANNEAU DE FERMETURE DU MEME BOITIER DE SERVICE ELECTRIQUE

(30) Priority: 19.02.2018 IT 201800002804
(43) Date of publication of application: 21.08.2019
(73) Proprietor: Pucci, Luca, 50050 Capraia e Limite (IT); Pucci, Andrea, 50050 Capraia e Limite (IT)
(72) Inventor: Pucci, Luca, 50050 Capraia e Limite (IT); Pucci, Andrea, 50050 Capraia e Limite (IT)
(74) Representative: Emmi, Mario

(56) References cited:
- EP-A1- 2 801 680
- EP-A1- 3 059 825
- EP-A1- 3 113 309
- IT-A1- FI20 100 012
- US-B1- 8 445 780

## Description

### Field of the invention

The present invention relates to the technical field of frames for electrical and/or plumbing service boxes arranged in houses and/or buildings for the purpose of accommodating electric cables, hydraulic pipes or the like.

In particular, the invention relates to an innovative frame enabling to also apply, in addition to the regular closure panel of the frame itself, the panel belonging to the electric and/or plumbing service box with a simple and functional constructional solution.

### Brief outline of the prior art

Electrical and/or plumbing service boxes have been known for a long time and they have been installed in houses in general, as they contain inside the electrical and/or plumbing components supplying consumptions, such as part of cables, hydraulic pipes, etc.

The service box is in the form of a box-shaped element of various sizes having an open side for inserting the components.

The service box is installed in the previously drilled wall and then a frame is applied around the edge thereof. The purpose of the frame is to fasten the service box into the hole and lock it by means of walling the frame level with the wall.

The frame, well known as well, is in the form of a frame applied around the edge of the service box, by fastening to it before or after the installation level with the wall.

The most external perimeter part of the frame is generally the abutment part level with the wall and then it is blocked by applying plaster.

European Patent EP3059825 in the name of the same applicant is known, that describes a new type of frame to be applied to electrical service boxes, specifically to flush boxes configured for switches and electric fruits, therefore equipped with a closure plate of the service box provided with an opening for the outlet of switches, whose rear part is inserted within the service box.

This patent describes a solution wherein the frame forms a cavity delimited by lateral walls and wherein the supporting plate of the service box is applied and a prospective finish plate which is flush with the wall and overlapping to the plate of the service box.

Registers are also provided in the frame, enabling to space the plate from the service box as needed.

The potential application of the finishing plate to the supporting plate occurs by housing within the cavity, thus being hardly removable if dust or residues insert in the walls which delimit the cavity flush with the finishing plate. Moreover, a specific manufacturing which enables the application of the finishing plate is required onto the whole structure.

The same applicant filed a previous European patent number EP2801680.

The patent describes a frame in the form of a frame having a central opening applied to the service box. The frame lies along the whole edge of the box so that the opening thereof enables the access and is coaxial with the opening of the electrical service box.

The fastening of the service box to the frame occurs through quick means.

The frame forms a perimeter edge which stands in perpendicular manner from the frame itself and surrounds the hole. A tongue or horizontal bracket branches off from this perpendicular edge, in correspondence of the base thereof, that forms an abutment surface for a closure panel. This edge forms the containment guide for this closure panel of the frame which lies against said abutment. The panel is equipped with a magnet which holds a corresponding opposite magnet arranged on the abutment.

Even being functional, this solution is endowed with the technical disadvantage of being structured so that the closure panel of the service box may not be applied in addition to the closure panel of the frame in any ways.

The impossibility to apply the closure panel belonging to the service box is a strong limit for the application of such service boxes, as regulations often provide for the use of the closure panel of the service box itself.

EP3113309, US8445780B1 and ITFI20100012 A1 publications are known as well.

This publication describes an electrical service box comprising a frame 13 which is integral to the remaining part of the service box thus forming a one-piece single body. In that sense, having this service box its own perimeter frame 13 integral to itself, it is difficult to apply a further removable frame to the service box, like the frame described in EP2801680, which would be overlapping to the original frame, thus making the two solutions (the one of EP2801680 and the one of EP3113309) incompatible with each other.

By virtue of the fact that the frame is integrated in the structure of the service box, this solution proves to be poorly flexible, just because it does not enable or however makes little functional the application of another type of frame, except for the integral frame already provided in the structure thereof. Therefore, if this frame 13 does not fit for any reasons, a different external frame may not be applied to it.

Moreover, placing more service boxes side by side requires a closure with an own finishing panel for each box. This means that, if two different service boxes are placed side by side, there will be two frames near to each other and therefore two external finishing panels wherein the discontinuity between them will be evident.

### Summary of the invention

Therefore, the aim of the present invention is to provide a frame assembly for closing electrical and/or plumbing service boxes which resolves said technical disadvantages.

In particular, the aim of the present invention is to provide a frame assembly also enabling the application of the cover of the electrical and/or plumbing service box in addition to the specific cover of the frame which keeps maintaining its own features of easy removability and applicability.

Therefore, the present purposes are achieved by means of a frame assembly (1, 50) fit to be arranged on an electrical and/or plumbing service box (110) equipped with an access opening (140).

This frame assembly comprises a frame (1), equipped with a central opening (100) which is aligned in use with the access opening 140 of the electrical and/or plumbing service box, and a closure panel (50) configured to be applied to the frame (1) so as to close said central opening (100), thus also closing the opening 140 of the electrical and/or plumbing service box.

This frame (1) comprises an annular abutment surface (6) which delimits said central opening (100) and on which said closure panel (50) is applied in leaning position.

The frame further comprises an annular wall (3) which stands in substantially vertical manner from the annular abutment surface (6) so as to form a containment frame from which such annular abutment surface internally branches off radially and inside which the closure panel (50) is applied in removable manner, the closure panel (50) arranged in leaning position onto the annular abutment surface (6).

Therefore, fastening means (10, 10') are provided for fastening said closure panel (50) in removable manner inside said frame.

According to the invention, such fastening means (10, 10') comprise at least one first element (10) arranged on the annular abutment surface (6) and at least one second element (10') arranged on the closure panel (50) in such a position that, when the panel is inserted within said frame, the second element (10') is arranged in contact with the first element (10). The first and the second element are configured to create a firm but detachable hold when they are coupled to each other, for example by means of Velcro^{®} or magnets. Moreover, said first element (10) and second element (10') are configured so that, when they are coupled to each other, they cause the raising of a predetermined amount of the closure panel with respect to the annular abutment surface on which the closure panel is arranged in leaning position by means of said fastening means.

In this particularly simple way, an interspace (60) is created under the closure panel (50) of such a size as to enable the arrangement under the closure panel (50) of the closure panel (140) belonging to the electrical service box on which the frame is destined to be applied in use.

This solution is constructively very advantageous as it is particularly simple and functional.

This solution is functional as the fastening means also have the purpose of wedges for raising the panel 50 even maintaining it firmly connected to the abutment plane and making its removal easy.

The solution is constructively simple, as it is sufficient to apply suitable releasable connection means to the abutment plane and to the corresponding panel for creating a firm connection but easily removable if necessary, with no necessity to rely on the potential mechanical interference between the panel and the wall of the frame, which can be blocked by dust.

In this way, the whole assembly is already arranged for housing, with no further structural modifications, the panel of the service box, while ensuring a firm application of the panel of the frame.

A hybrid solution can include the combination of a panel 50 having a cavity for partially housing the panel 140 of the service box along with the fact of being raised with respect to the abutment plane by means of the said fastening means. In this way, this synergic action of both of them generates the interspace of sufficient size.

A further hybrid solution included and comprised here, can equally provide for example the combination of fastening means of suitable height, in combination for example with a manufacturing of an end part of the abutment plane such as to form a lowered area 260a onto which the cover of the service box lays, thus making the cover of the frame more raised. This helps to create a containment housing of the panel of the service box, by using wedges of small sizes.

Advantageously, this annular abutment surface (6) has such a shape as to enable the application of means (130, 130') to fasten the panel (140) of the box to the box inside said interspace (60).

For example, it can be drilled in correspondence of the holes which receive the screws for the fastening of said panel 140 or it can have such a surface extension as not to cover these holes.

Therefore, advantageously, this annular surface (6) which delimits said central opening (100) has such an extension that, when the frame is applied in use to the edge of the electrical and/or plumbing service box to which it is destined, the holes (130) of the electrical and/or plumbing service box arranged for housing the fastening screws of the cover panel (140) are clear.

Advantageously, these fastening means (10, 10') comprise at least one wedge block (10) arranged on the abutment surface (6) and a corresponding wedge block (10') arranged on the panel in such a position as to overlap when attached to each other when the closure panel (50) is applied within the frame.

Advantageously, said wedge blocks are spread along at least three sides formed by the abutment surface (6) so as to create a firm support.

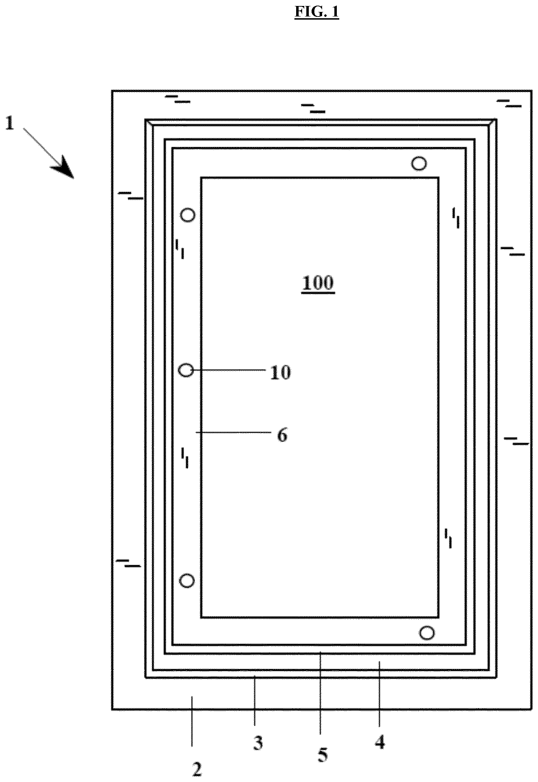

For example, as depicted in figure 1, three blocks onto one long side and one block onto the two short sides can be provided, thus leaving the other long side of the abutment surface free from blocks.

This enables a firm support of the panel, whereas it can also be rotated by pressing it towards the long side free from blocks so as to determine its detachment from the blocks and its partial lifting.

Advantageously, these wedge blocks are in the form of magnetic blocks.

Advantageously, these blocks (10) arranged on the abutment surface (6) are made of magnetic material, while the blocks (10') arranged on said abutment surface (6) are made of a metallic material, iron material for example.

In this way, the problem of accumulating dust onto the panel through magnetic attraction may be eliminated, because the magnet with opposite polarity to the one applied onto the abutment (6) is replaced by a metallic element which is attracted by this magnet.

Advantageously, in a further embodiment, these wedge blocks are externally covered with Velcro^{®} material. When they come into contact, then they remain connected to one another by means of Velcro^{®}.

Advantageously, the frame comprises two corridors (11, 12), spaced from each other, going along the contour of the frame on the opposite side of the abutment surface (6) .

They are useful for the application of constraints which connect the frame to the service box and/or the earthing systems.

Advantageously, the frame forms perimetrically a pilot path (13), substantially square-shaped (that is substantially L-shaped) arranged on the side of the most external corridor (11) and fit to hold the edge of the electrical service box.

Advantageously, connection means (20, 30) are further comprised for fastening the frame to the service box in a removable manner.

According to the invention, these connection means comprise one or more plates (20) equipped with at least one hole for enabling their fastening to the frame by means of at least one screw.

According to the invention, the plate is connected to the frame by fastening it to one of the said corridors (11, 12) by applying the screw into its hole and screwing it to one of said corridors.

Advantageously, the plate is selected with such an extension as to reach at least in part said pilot path (13) when it is suitably applied to one of said corridors.

In this manner, it is sufficient to apply the frame to the profile of the service box so that the edge of the service box abuts this square-shaped perimetral pilot path 13 for subsequently applying the plate which will go in contrast with this edge of the service box, thus locking it in loco.

Advantageously, the end part of this plate can be V-shaped so as to form a snap-together pilot path for blocking the edge of the service box.

Preferably, the plate can have two fastening holes with the distance between the centers corresponding to the two corridors (11, 12).

Advantageously, the frame comprises:
- An external annular surface (2);
- An internal annular surface (4, 6) comprising said annular abutment surface (6) arranged in concentric manner with respect to the external annular surface so as to delimit said central opening (100);
- Said vertical annular wall (3), which is interposed between said external annular surface and said internal annular surface.

Advantageously, said internal annular surface (4, 6) comprises a corridor (5) obtained along the whole perimeter of the frame and interposed between the annular surface (4) and the abutment surface (6).

Advantageously, it is also described here a further configuration of frame assembly (1, 50) fit to be arranged onto an electrical and/or plumbing service box (110) equipped with an access opening (140), said frame assembly comprising:
- A frame (1), equipped with a central opening (100) and a closure panel (50) configured to be applied to the frame (1) so as to close said central opening (100);
- The frame (1) comprising an annular abutment surface (6) which delimits this central opening (100) and on which said closure panel (50) can be applied in leaning position;
- First fastening means (10) applied onto said annular abutment surface and fit to be coupled in a detachable manner to second fastening means (20) arranged onto the panel so that the panel can be applied to the abutment surface (6) in a removable manner;
- The frame shaping, on the opposite side to the side for the application of the first fastening means (10), a pilot path (13) into which the edge of the service box has to be inserted;
- Connection means (20, 30) for fastening the frame to the service box in a removable manner, said connection means comprising one or more plates (200) equipped with at least one hole for enabling the fastening to the frame by means of at least one screw;
- According to the invention, the plate is shaped with a bent and elastically deformable end (210) so as to form a pilot path which forms an elastic snap-together lock for the service box.

It is also described here a kit, no longer covered by the claims, comprising:
- An electrical and/or plumbing service box comprising a closure panel (140) and fastening means (130, 130') for fastening said closure panel to the electrical and/or plumbing service box;
- A frame assembly (1, 50) suitable to be arranged onto said electrical and/or plumbing service box (110) equipped with an access opening (140), said frame assembly having one or more of the above-described features.

### Brief description of the drawings

Further features and advantages of the present frame assembly and the combination of frame assembly and service box, according to the invention, will become apparent from the following description of an embodiment thereof, given only by way of non-limiting example, with reference to the attached drawings, wherein:
- Figure 1 depicts a view from above of the frame only, according to the present invention;
- Figure 2 depicts a sectional view of the outline of the frame only, according to the present invention;
- Figure 3 is a sectional schematization for highlighting the application of the aforesaid frame to a service box 110;
- Figure 4 is an axonometric view depicting the application of the frame, subject of the invention, to an electrical and/or plumbing service box;
- Figure 5 and figure 6 depict the phase of application of the closure panel (50) of the frame onto the frame applied to the service box, highlighting the formation of the interspace 60 within which is housed the closure panel 140 of the electrical service box;
- Figure 6, figure 7 and figure 8 depict in fact the application of this panel 140;
- Figures from 9 to 13 are axonometric views and in particular:
- Figure 9 is a mounted assembly;
- Figure 10 depicts the rear view of figure 9 on the side of the electrical service box for better highlighting the fastening system of the service box to the frame by means of the drilled plates 20 which are inserted by means of suitable screws into the corridors 11 and 12 of the frame;
- Figure 11 and figure 12 are two exploded view which depict in succession the application of the panel 140 of the electrical service box to which the panel 50 of the frame overlaps;
- Figure 13 is a further exploded view;
- Figure 14 depicts a further exploded view in which the screws 71 and 72 are highlighted for fastening the parts of the frame to each other (in the event that it is not made in one-piece). Moreover, figure 14 depicts a variation of the plate 20 (now numbered as plate 200) which end 210 is V-shaped so as to have a function of snap-together spring for snap locking the service box;
- Figure 15 is a further overall rear view;
- Figure 16 is a further variation of frame wherein the abutment plane on which the panel 50 lays is obtained in the form of a planing which forms a plane 260a connected by means of a step (vertical wall) to the plane 260b; the plane 260b is the one destined to house the magnet (or equivalent Velcro^{®} layer);
- Figure 17 depicts a further advantage of the present invention in the event that the frame surrounds also two or more service boxes placed side by side within the area delimited by the opening of the frame.

### Description of some preferred embodiments

With reference to the attached drawings, it is structurally described below the frame assembly subject of the invention and fit to be arranged onto an electrical and/or plumbing service box (110) equipped with an access opening, as per claim 1.

This frame assembly (1, 50) comprises:
- A frame (1), equipped with a central opening (100) and a closure panel (50) configured to be applied to the frame (1) so as to close said central opening (100);
- This assembly also comprises fastening means (10, 10') for connecting the panel to the frame in a releasable manner;
- According to the invention, as described thereinafter, the frame assembly is structurally configured so that, when it is applied for closing the opening, an interspace (60) is formed under the closure panel (50) of such a size as to be able to also house the closure panel (140) belonging to the electrical service box.

As explained thereinafter, the preferred solution provides the formation of this interspace by raising the closure panel (50) through a suitable selection of the height of the fastening means (10', 10'') that enable to apply such a panel to the frame in a removable manner.

An equivalent solution can comprise the generation of this interspace by creating a panel 50 which forms a cavity suitable for housing the closure panel 140 of the service box.

An equivalent solution can provide also a lowering area of the frame where to lay the closure panel of the service box.

Said equivalent solutions can also cooperate with a suitable selection of the height of said fastening means.

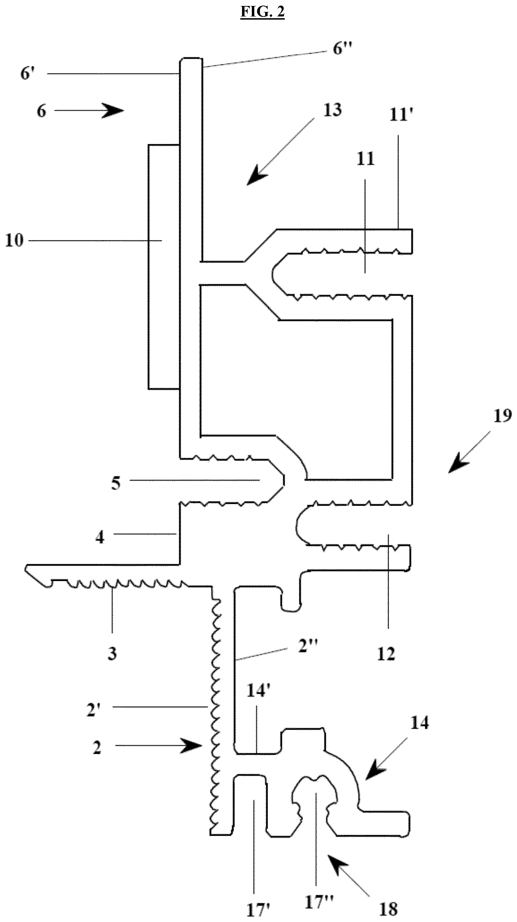

Frame assembly means, in the present description, the combination of the frame, for example described in figure 1 and figure 2, that is cooperating with its own cover panel or closure 50 which is applied to it in a removable manner, with the purpose of fully closing the central opening 100 shaped by the frame itself.

Generally, this panel 50 is a continuous surface fully closing the opening.

Not all the figures, in particular figure 2, are in scale, reason why the proportions between parts are indicative and not limiting.

Different sizes and proportions can thus be provided, without exceeding the scope of the present invention.

Going therefore into the structural details of the invention, figure 1 depicts in a view from above this frame which is formed by an annular surface (2, 4, 6) delimiting a central opening 100 of the frame.

The term "annular" is not to be understood in a limiting sense, therefore limited to circular, elliptical or oval shapes. In the present description, "annular" means any closed shape for delimiting a central opening, and thus obviously also including the rectangular shape of figure 1 or other shapes, such as the square one.

Given the above, going into the greater structural details, the section of figure 2 depicts a horizontal wing 2 which forms above the surface 2'.

This surface 2' is preferably milled and thus shows a certain degree of superficial wrinkledness for facilitating the setting of plasterwork material or of setting materials in general.

With respect to this square-shaped surface (therefore generally L-shaped), there is present the small wing 3 which stands orthogonally from it and has a front face 3', milled as well, and a smooth rear face.

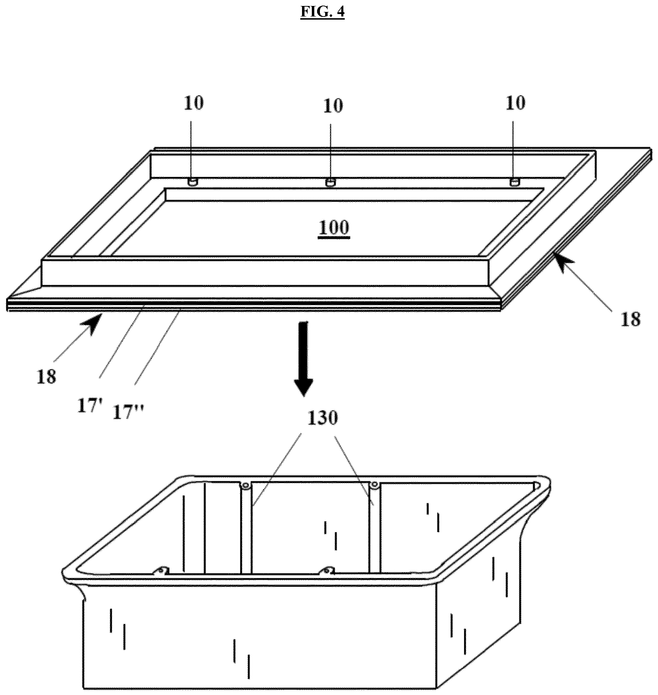

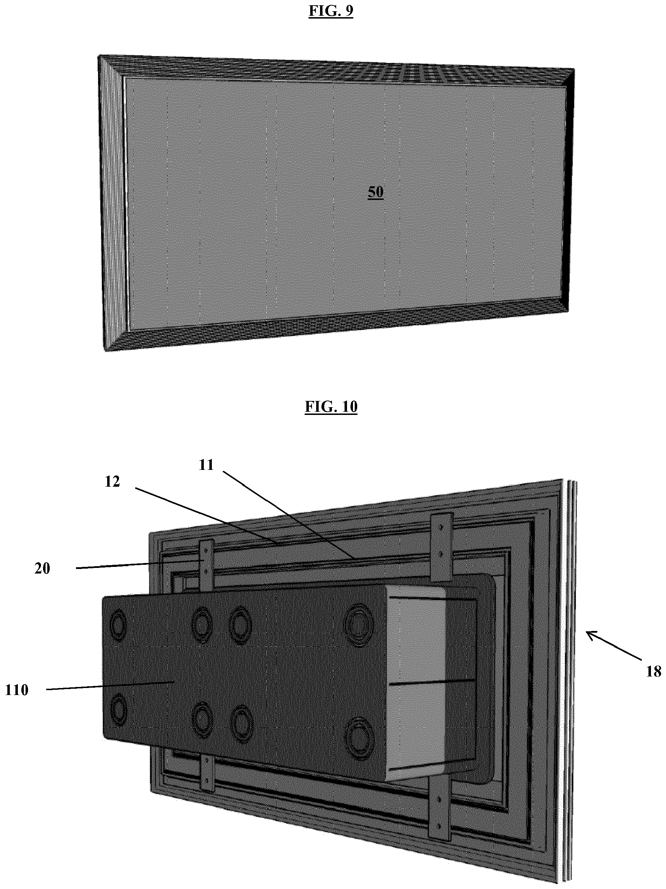

The small wing 2, in correspondence of its lower surface 2", is connected through the vertical branch 14' to the part 18 which represents and shapes all the external lateral perimeter 18, as also depicted in figure 4 or for example in figure 10 for clarity purposes.

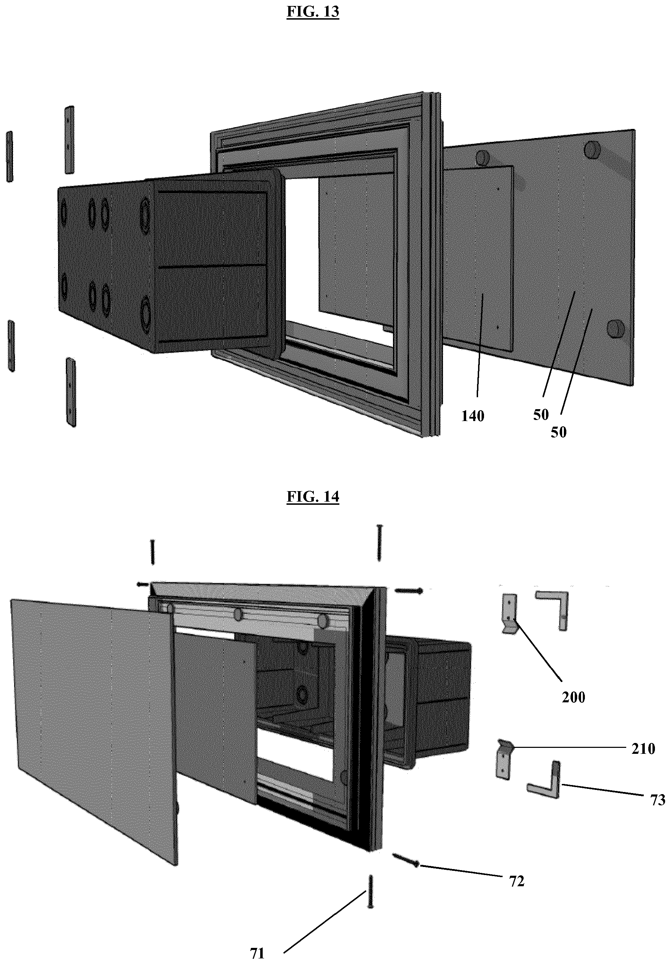

Going back to figure 2, this perimeter 18 comprises two corridors 17' and 17" which are also highlighted by simple dark strokes in figure 4, and which purpose is also that of enabling to join and strengthen the outline through the insertion of self-tapping screws (71, 72), thus enabling to also join frame outlines made of several parts and cut at corners with angles other than 45°. An example of application of those screws is indeed depicted in figure 14. By inserting the screws in these corridors, the various parts of the frame are fastened to each other when they are made in more modular parts, indeed cut in correspondence of the corners. In this way, parts with cutting angles different from 45 degrees may be produced, thus being able to join the parts together with no necessity of special angle brackets described thereinafter (and also depicted in figure 14 with the numbering 73).

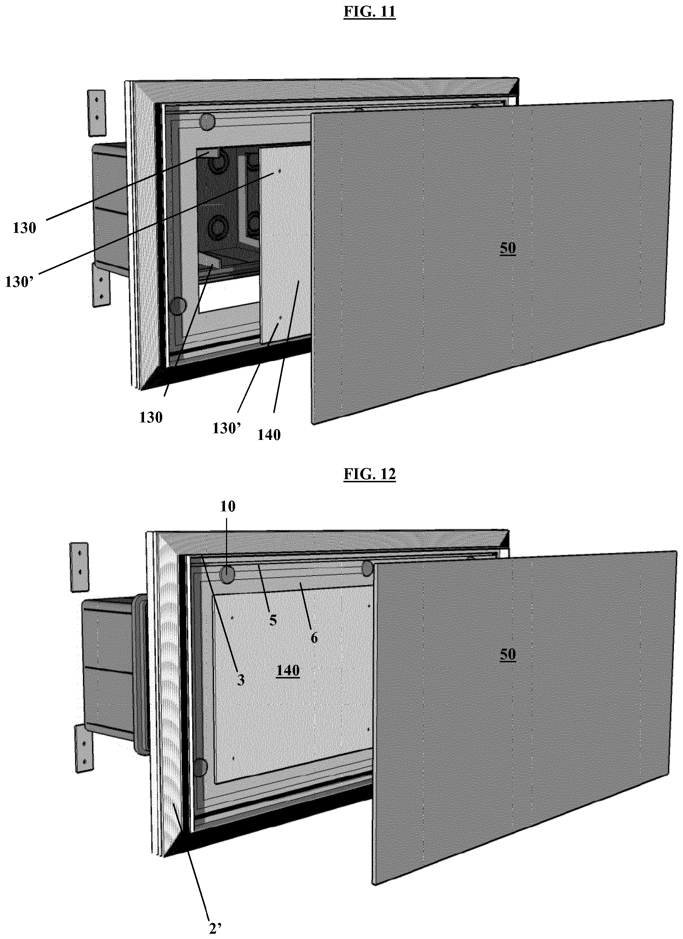

Going back to figure 2, the part downstream the vertical small wing 3 comprises an upper surface (4, 6) which is interrupted by a corridor 5 hollowed out along the whole outline which surrounds the frame shape, as depicted also in figure 1 from above and in figure 12.

This corridor can house a wind and water gasket if it is used in external sheltered environments.

The surface 6 forms per se a support plane onto which the block elements are fastened for fastening and raising at the same time the panel 50 with respect to the support plane itself for creating the insertion space of the closure panel belonging to the service box.

In a preferred solution they are in the form of ferromagnetic elements 10.

Ferromagnetic element means the coupling of two magnets with opposite polarity or the coupling of a magnetic element attracting a ferrous element.

As described in greater details thereinafter, the solution providing a magnetic element which is coupled to a metallic element, iron for example, is preferred.

Therefore, in the preferred solution of the invention, one or a plurality of magnetic elements 10 are spread along the abutment plane formed by said surface 6. These magnets are well visible in figure 1 and in the axonometric figures. These magnets are coupled with metallic elements 10', in particular ferrous ones, which are correspondently spread onto the closure panel 50, as highlighted in the exploded view of figure 13 as well.

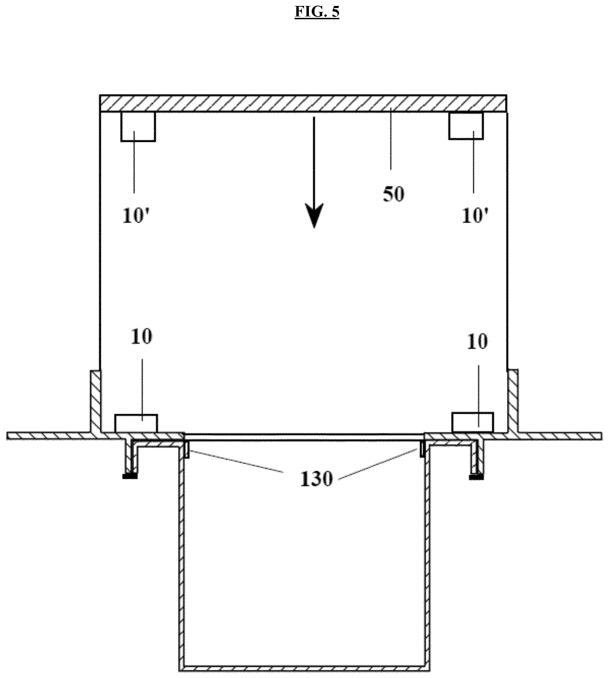

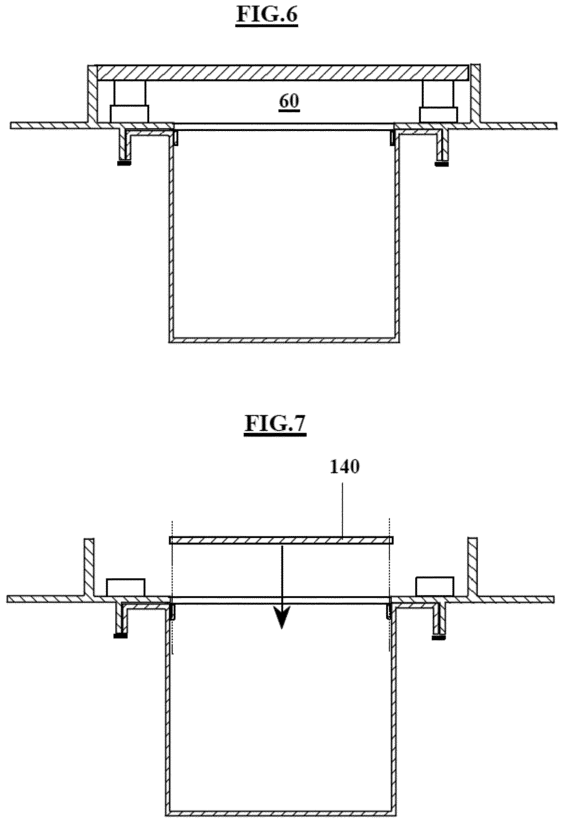

This closure panel 50 is described in figure 5 and in figure 6 and the application through the overlapping of the magnetic blocks to the ferrous ones is visible.

The height of these blocks (10, 10'), for example of cylindrical shape (obviously, other shapes are possible, such as rectangular- or square-shaped), is such that the panel is raised with respect to the abutment plane 6 onto which it leans while fastened in a removable manner at the same time. In this way, an interspace 60 is shaped (or housing or cavity, in other words) in which the closure panel 140, specific of the electrical/plumbing service box is also housed (see also the exploded view of figure 13).

The panel 50, as also depicted in figure 6, is obviously flush with the vertical small wing 3.

The closure panel 140 as well is generally a continuous panel which fully closes the service box.

The use of ferrous elements in the panel 50, while applying the magnetic elements to the abutment 6 only, has the advantage of reducing the dust accumulation onto the panel itself, since the dust attraction is strongly reduced because of the generation of the magnetic field, which can have an effect on dust attraction.

If magnetic elements are also used on panel 50, said dust attraction has proved to be considerably greater.

An alternative solution could comprise the use of simple blocks on which a double-sided adhesive tape with a Velcro^{®} surface is applied.

In practice, even in this case the blocks work as wedges but the connection to each other occurs by means of Velcro^{®}.

Going further with the structural description of the invention, again with reference to figure 2, the part underlying surface 4 and 6 comprises the formation of two corridors (11, 12) still hollowed out with a perimeter shape (i.e. following the perimeter of the frame) and also highlighted in figure 10.

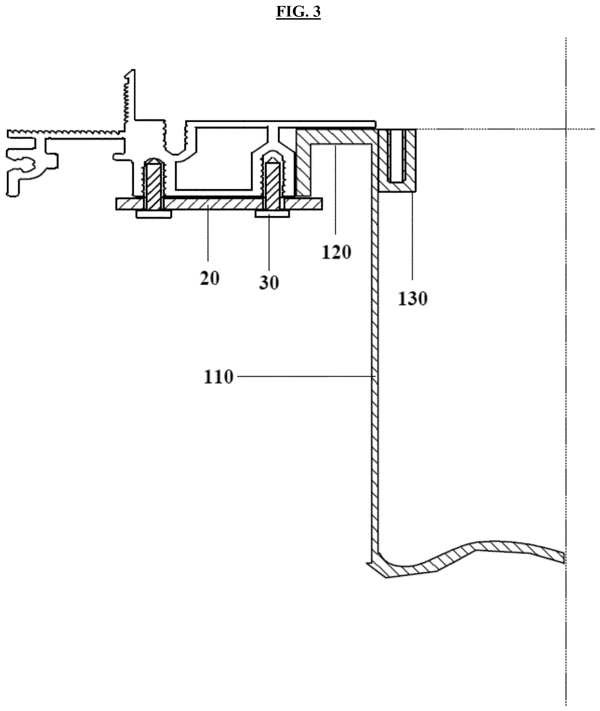

As shown in figure 3, they are suitable for housing fastening screws through which a connection plate 20 can be fastened (see also figure 10).

In addition, the purpose of the aforementioned corridor is also for applying to specific points small rag bolts or cablets for grounding the frame. Thus, figure 3 depicts the edge of the service box which is housed below the surface 6 in the square-shaped area 13 depicted in figure 2, so that the vertical side 11' and the horizontal side 6" serve as an abutment surface.

Basically, by means of this squared shape, when the frame is applied onto the edge of the service box, the whole edge of the box abuts against the vertical side 11' and with the horizontal side 6" which lays on the upper edge of the box, as outlined in figure 3.

This forms a sort of "pilot path" which strongly facilitates the coupling by creating a "forced" centering position for the service box with respect to the frame.

This square-shaped pilot path could equally be slightly radial or sloping, to be considered in this solution something falling within the wording "square-shaped" or "L-shaped" and with the same purpose.

At this point, for locking the frame of the service box in a releasable manner, the aforesaid flat or shaped plates 20 are applied (for example, one for each side of the frame or two for each side only on the long sides as depicted in figure 10).

In particular, the plate can be fixed in a point of the channel 12 by inserting and screwing the relative screw into the channel. With the suitable fastening degree, the plate is still rotatable around the fulcrum formed by the screw, so that all the plates can be rotated backwards towards the wall 18 (i.e. towards the opposite side with respect to the application point of the service box). Then the frame is applied onto the edge of the service box and therefore the plate is rotated to the configuration of figure 3 or figure 10. The lock is obtained by fastening the screw more firmly.

Advantageously, the lock can be optimized by also inserting the second screw into the second hole of the plate.

In particular, also the screw 30 of figure 3 is screwed thus obtaining a better lock of the edge of the service box.

In all the aforementioned cases, in this manner, the excess of the plate, as still depicted in figure 3, goes under the edge of the service box, thus fastening it against the square-shaped abutment (11', 6").

Depending on the fastening degree of the screws, the pressure with which the frame is engaged to the service box can be increased or decreased as needed.

This solution of connection through a single screw, or two screws, and plate is very easy and functional with respect to other systems generally in use.

As described in the beginning, the frame (see figure 2) also shapes a housing (14', 2") which goes obviously in the form of a corridor as well. It is useful for applying, just in correspondence of the corners, L-shaped metallic angle brackets (73) which for example are connected through self-tapping screws.

The frame can also indeed be made of four parts cut to 45° at the angles which can be coupled to each other. The L-shaped angle brackets join these parts in correspondence of the angles. These angle brackets are depicted in figure 14.

Obviously, the frame could be made of one-piece.

Going further with the structural description of the invention, each electrical/plumbing service box comprises along its perimeter edge the channels 130 shaped to house the fastening screws for locking the own closure panel 140. They are known within the prior art and represent the classic fastening system for applying the closure panel 140 of the electrical service box. These channels, for clarity purposes, are also depicted in figure 11 highlighting the corresponding holes 130' relative to the cover 140 of the service box. The screws which grip in the channel 130 of the service box are inserted into the holes 130'.

Therefore, each electrical service box is sold and equipped with its own closure panel 140 which is equipped with the aforesaid corresponding holes 130', such that as the panel is arranged for closing the service box, the holes of the channel 130 are aligned with the holes 130' present on the panel 140 such that the fastening screws can be applied.

Going further with the structural description of the invention, it can be inferred that the edge 6, or at least a part thereof, forms the abutment plane onto which leans the closure panel 50, as for example depicted in figure 6 and also evident from the other figures, for example figure 12.

The vertical wall 3 (see also figure 11 and 12) shapes a containment frame within which the panel is housed, that, preferably, is flush with the upper end of the vertical panel or a little below.

The function of this frame is both for containing the panel and also for forming a perimeter around which the plaster is applied while walling the frame, the plaster can also become flush with the end of the vertical wall 3 by immersing the rest of the frame.

The elements for the releasable coupling (10, 10') (for example magnet-metal or Velcro^{®}-Velcro^{®}) can be spread so that they are absent on one side for example. For example, figure 12 depicts the magnets 10 on the long superior side but they are absent on the long inferior side. This embodiment facilitates the panel removal. In this manner, it is sufficient to push the panel onto the side without magnets with a force directed towards the abutment 6 for making the panel rotate by raising the opposite side above the vertical wall 3 and thus creating the sufficient space for grabbing and removing it easily.

Moreover, this solution enables not to interfere with the finishing of the wall without causing any damages and thus keeping the electrical service box completely safe.

Therefore, the panel can have such a superficial extension as to fill up the frame 3 and be flush with the wall 3, thus being a solution with structural continuity and a better esthetic quality (see for example figure 9).

The abutment 6 has such a superficial extension as not to overlap the holes 130 of the service box.

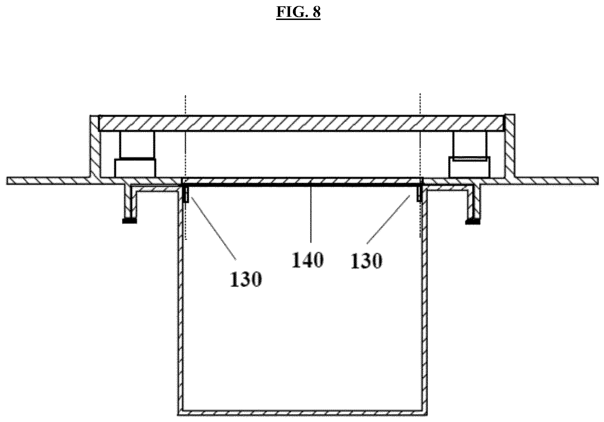

In this manner, by means of the suitably raised magnetic elements which shape the interspace 60 and also by means of the fact that the central opening of the frame 100 is such as not to obstruct the holes 130, the panel 140 of the service box can also be easily applied, as depicted in the sequence of figure 7 and 8, by further fastening it to the service box by means of its own specific screws. A part of the edge of the closure panel of the service box can obviously lean against the end of the abutment 6.

The magnetic elements also serve as wedges to create the interspace even if other suitably arranged raising means could be used.

In a different embodiment, for example, some support small wings may be provided that branch off from a certain height of the vertical wall 3 and on which the panel 50 leans. Magnetic elements or Velcro^{®} of any suitable height may be provided on these supports.

This solution can be considered as an equivalent of the previous one, even if more structurally complex because it requires the arrangement of a suitable support onto the vertical wall 3.

The frame can be made of suitable materials, such as for example aluminum.

This solution can be produced in a series with specific sizes suitable for adapting each one to a specific service box with specific size and available on the market.

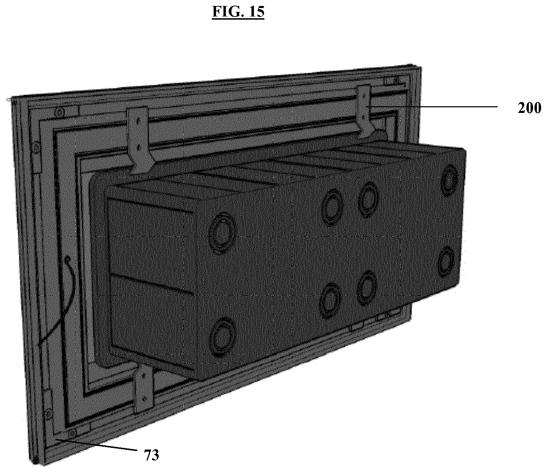

A further different embodiment of the invention is depicted in figure 15. In this case, the plate 20 is still replaced by a plate 200 which end, which is attached to the edge of the service box, is shaped like a V-folded appendix, so as to form an attachment hook which pushes onto the edge.

In this manner, towards the application direction of the frame to the edge of the service box, this V-shaped end is elastically deformed during the application passing over the edge and causing a snap-together lock after having passed over the edge. The terminal appendix of the V folds indeed when it approaches the other leg of the V due to elastic deformation until the passing over occurs. In this way, the insertion is greatly facilitated, as the plates can be arranged in position from the beginning, thus enabling to directly apply the service box to them and with no need, as described in the first embodiment, to rotate first the plates backwards for applying the service box and then to counterrotate them fastening them in the block position. In fact, the plates serve in this manner as pilot path for the coupling.

This solution with V-shaped pilot path can be applied on the present frame assembly described but can be applied to any frame for service boxes, known in the prior art as well, provided that the frame has at least a corridor to which the plate can be applied and which V-shaped excess is such as to be positioned in use below the edge of the service box.

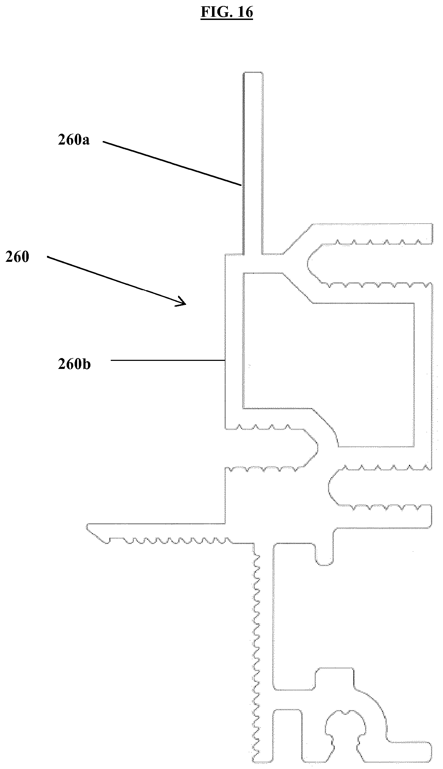

A further embodiment of frame, provided what has been described above, is described in figure 16.

It is different from the previously described embodiments only for the abutment surface 6 which owns a particular processing in its whole.

In fact, in this configuration, this surface 260 is formed by a superior surface 260b on which the block is applied and an inferior surface 260a which is obtained by planing and destined to support the cover of the service box. In this manner, it is formed a step between the plane 260b and the plane 260a and the step forms per se a pilot path which facilitates the determination of the correct position for applying the panel of the service box, thus concurring to shape the housing 60 by reducing the height of the blocks (10', 10").

Provided what has been described previously, the possibility to produce and sell a kit equipped with the frame assembly (i.e. the frame and covering 50 thereof) with its own suitable service box equipped with its own closure for all the described embodiments is not excluded.

Therefore, the operation in use is the following:
The frame is applied onto the edge of the service box, as for example shown in figure 4, taking care of inserting the perimeter of the superior edge of the service box into the perimeter formed by the square-shaped area 13 of figure 2. At this point, the service box is applied to the frame in a removable manner through the application of the plates 20 and relative screws which can be arranged in the preferred points as the screws are insertable in any point along the corridors 11 and 12. Any number of plates can be used.

In case of plate with V-shaped ends, they will be applied to the frame in advance, therefore it will be sufficient to push the frame onto the edge of the service box to obtain an automatic snap-like lock.

At this point, the frame is fastened and becomes a whole with the service box.

The frame and the service box can be applied in the hole of the wall by inserting the service box into the hole until the rear part 19 of the frame (see figure 2) touches the wall. At this point, the plaster can be arranged, walling the frame and taking care of bringing the plaster flush with the vertical wall 3.

The suitable electrical/plumbing material is inserted into the service box and the closures constituted by the closure 140 of the service box and the closure of the frame can be applied.

The closure 140 is generally a continuous panel which fully closes the service box.

The closure 140 is applied by screwing it by means of screws inserted in the holes 130 and then the panel 50 is applied within the frame which closes the whole.

In the event of abutment surface 260a, as per figure 16, the application of the panel is facilitated.

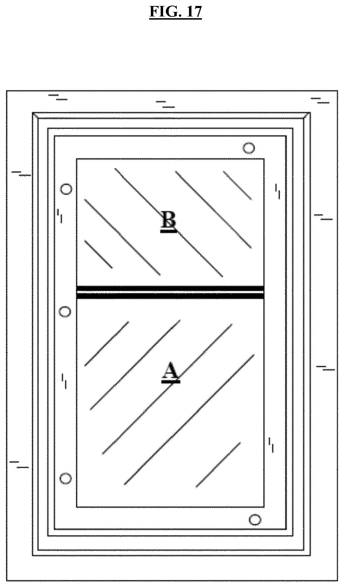

As finally depicted in figure 17, the present frame subject of the invention also enables, among the other advantages described, to contain or surround, exactly as described above, even more service boxes of smaller sizes with respect to the opening of the frame and placed side by side. For example, figure 17, outlines the frame of figure 1 which contains two electrical service boxes (A, B) placed side by side. The rest of what has been described remains unchanged and therefore, each one of these two service boxes (A, B) will have its own cover and then the external cover 50 will be present, that is a one-piece cover which leans onto the edge 6, as described. The number of service boxes can even be more than two. This proves to be a very flexible solution.

## Claims

1. A system comprising an electrical and/or plumbing service box equipped with an access opening and a frame assembly (1, 50) suitable for being arranged onto the electrical and/or plumbing service box (110) equipped with an access opening, said frame assembly comprising:
- A frame (1), equipped with a central opening (100), and a closure panel (50) configured to be applied to the frame (1) so as to close said central opening (100);
- The frame (1) comprising an annular abutment surface (6) which delimits said central opening (100) and on which to apply said closure panel (50) in leaning position, the frame further comprising an annular wall (3) which stands in a substantially vertical manner from said annular abutment surface (6) so as to form a containment - frame (3, 4, 6') from which internally said annular abutment surface (6) branches off radially and inside which said closure panel (50) can applied, in a removable manner, so that said closure panel (50) is arranged in leaning position onto the annular abutment surface (6);
- Fastening means (10, 10') for fastening said closure panel (50) in a removable manner inside said containment - frame (3, 4, 6');
- Wherein the frame assembly is structurally configured so that, when the closure panel (50) is applied for closing the said opening, an interspace (60) is formed under the closure panel (50);
- The frame forming a substantially square-shaped area (13) or square shaped area (13) formed by a vertical side (11') and a horizontal side (6"), wherein the horizontal side (6") is the lower surface (6'') of the abutment surface (6), adapted to receive the edge of the said electrical and/or plumbing service box;
**Characterized in that**
- The electrical and/or plumbing service box comprises a closure panel (140) and an edge;
- The interspace under the closure panel (50) has such a size as to enable the arrangement, under the closure panel (50), of the closure panel (140) belonging to the electrical and/or plumbing service box on which the frame is destined to be applied in use;
- Wherein the edge of the said electrical and/or plumbing service box has a shape complementary to the one of the said substantially square-shaped area (13) or square shaped area (13) so that, when the frame is applied onto the edge of the electrical and/or plumbing service box, the lateral part of the edge of the said electrical and/or plumbing service box abuts against the vertical side (11') of the substantially square-shaped area (13) or square-shaped area (13) of the frame and with the horizontal side (6'') of the substantially square-shaped area (13) or square-shaped area (13) of the frame which lays on the upper part of the edge of the electrical and/or plumbing service box;
- And wherein connection means (20, 30) are further comprised for fastening the frame to the said electrical and/or plumbing service box in removable manner, the said connection means comprising one or more plates (20) equipped with at least one hole for enabling their fastening to the frame by means of at least one screw;
- Wherein the plates are selected with an extension so as to reach at least in part said square shaped or substantially square shaped area (13), so that an exceeding part of the said one or more plates goes, in use, under the edge of the said electrical and/or plumbing service box, thus fastening, in use, the said edge of the said electrical and/or plumbing service box against the said square-shaped area (13) or substantially square shaped area (13) having a function of an abutment surface.

2. The system, according to claim 1, wherein said annular abutment surface (6) has such a shape as to enable the application of the means (130, 130') for fastening the panel (140) of the said electrical and/or plumbing service box to the said electrical and/or plumbing service box inside said interspace (60).

3. The system, according to claim 1 or 2, wherein said annular abutment surface (6) delimiting said central opening (100) has such an extension that, when the frame is applied in use to the edge of the electrical and/or plumbing service box to which it is destined, the holes (130) of the electrical and/or plumbing service box arranged for housing the fastening screws of the cover panel (140) are clear.

4. The system, according to one or more of the preceding claims, wherein said fastening means (10, 10') comprise at least one wedge block (10) arranged on the abutment surface (6) and one corresponding wedge block (10') arranged on the panel in such a position as to overlap when attached to each other when the closure panel (50) is applied within the containment - frame, preferably said wedge blocks (10) arranged on the abutment surface (6) are spread onto three sides of said abutment surface leaving the fourth side free from these blocks.

5. The system, according to claim 4, wherein said wedge blocks are in the form of magnetic blocks.

6. The system, according to claim 5, wherein the blocks (10) arranged on the abutment surface (6) are made of magnetic material, while the blocks (10') arranged on said abutment surface (6) are made of metallic material, iron material for example.

7. The system, according to claim any of claims from 4 to 6, wherein said wedge blocks are externally covered with Velcro^{®} material.

8. The system, according to claim 1, wherein said frame comprises two corridors (11, 12), spaced from each other, going along the contour of the frame at a side of the abutment surface (6) and below the said abutment surface, the said area (13) being arranged at the side of the most external corridor (11).

9. The system, according to claim 1, wherein the said plate is able to rotate around the longitudinal axis of the screw depending on the fastening degree of the screw so as to be able to be arranged in a position which goes against the edge of the electrical and/or plumbing service box, fastening the electrical and/or plumbing service box to the frame, or rotatable in a position which releases the said electrical and/or plumbing service box.

10. The system, according to claim 1 or 9, wherein the plate (200) is shaped with a bent and elastically deformable end (210) so as to form an elastic snap-together lock for the electrical and/or plumbing service box, preferably wherein the said end destined to be attached to the edge of the electrical and/or plumbing service box in use, is shaped like a V-folded appendix, so as to form an attachment hook pushing onto the edge and so that, towards the application direction of the frame to the edge of the electrical and/or plumbing service box, this V-shaped end shapes a pilot path elastically deforming when the frame is applied to the edge of the electrical and/or plumbing service box passing over the edge and causing a snap-together lock after having passed over the edge.

11. The system, according to one or more of the preceding claims, wherein said panel (50) further shapes a cavity suitable to house the closure panel (140) of the electrical and/or plumbing service box.

12. The system, according to one or more of the preceding claims, wherein the annular abutment surface has an upper surface (260b) on which the first element (10) is arranged and a lower surface (260a) obtained by planing and destined to the support of the cover of the service box.

13. The system, accordingly to claim 1, wherein the said exceeding part of the plate is positioned below the horizontal side (6") of the said pilot path (13) in the said position wherein the exceeding part blocks in use the edge of the said electrical and/or plumbing service box.

14. The system, accordingly to claim 1, wherein said fastening means (10, 10') comprise at least one first element (10) arranged onto the annular abutment surface (6) and at least one second element (10') arranged onto the closure panel (50) in such a position that, when the said closure panel (50) is inserted into said frame, the second element (10') is arranged in contact with the first element (10), said first and second element being configured to create a detachable connection when they are coupled to each other and, wherein, said first element (10) and second element (10') are further configured so that, when they are coupled to each other, they raise the closure panel (50) of a predetermined amount with respect to the annular abutment surface (6) on which the closure panel is arranged in leaning position through said fastening means so as to create an interspace (60) under the closure panel (50).

15. A method for inserting a service box into a hole of a wall comprising the phases of:
- Providing a system accordingly to one or more of the previous claims;
- Applying the frame of the said system onto the edge of the service box of the said system inserting the perimeter of the superior edge of the service box into the perimeter formed by the square-shaped area (13) of the frame and applying the service box to the frame in a removable manner through the application of the plates (20) and relative screws so that the frame is fastened and is a whole with the service box;
- Inserting the frame and the service box into the hole of the wall by inserting the service box into the hole until the rear part (19) of the frame touches the wall.

## Patentansprüche

1. System, umfassend einen Elektro- und/oder Sanitär-Verteilerkasten, der mit einer Zugangsöffnung ausgestattet ist, und eine Rahmenbaugruppe (1, 50), die geeignet ist, an dem Elektro- und/oder Sanitär-Verteilerkasten (110), der mit einer Zugangsöffnung ausgestattet ist, angeordnet zu werden, wobei die Rahmenbaugruppe umfasst:
- Einen Rahmen (1), der mit einer zentralen Öffnung (100) ausgestattet ist, und ein Verschlusspaneel (50), das dazu konfiguriert ist, an dem Rahmen (1) aufgebracht zu werden, um die zentrale Öffnung (100) zu verschließen;
- Den Rahmen (1), der eine ringförmige Anlagefläche (6) umfasst, die die zentrale Öffnung (100) begrenzt und an der das Verschlusspaneel (50) in angelehnter Position aufgebracht werden kann, wobei der Rahmen ferner eine ringförmige Wand (3) umfasst, die auf einer im Wesentlichen vertikalen Weise von der ringförmigen Anlagefläche (6) absteht, um einen Enthalterahmen (3, 4, 6') zu bilden, von dem innen die ringförmige Anlagefläche (6) radial abzweigt und innerhalb dessen das Verschlusspaneel (50) abnehmbar aufgebracht werden kann, so dass das Verschlusspaneel (50) in angelehnter Position an der ringförmigen Anlagefläche (6) angeordnet ist;
- Befestigungsmittel (10, 10') zum abnehmbaren Befestigen des Verschlusspaneels (50) innerhalb des Enthalterahmens (3, 4, 6');
- Wobei die Rahmenbaugruppe strukturell so konfiguriert ist, dass, wenn das Verschlusspaneel (50) zum Verschließen der Öffnung aufgebracht wird, ein Zwischenraum (60) unter dem Verschlusspaneel (50) gebildet wird;
- Den Rahmen, der einen im Wesentlichen quadratisch geformten Bereich (13) oder quadratisch geformten Bereich (13) bildet, der durch eine vertikale Seite (11') und eine horizontale Seite (6") gebildet wird, wobei die horizontale Seite (6") die untere Fläche (6") der Anlagefläche (6) ist, die dazu ausgelegt ist, den Rand des Elektro- und/oder Sanitär-Verteilerkastens aufzunehmen;
**dadurch gekennzeichnet, dass**
- Der Elektro- und/oder Sanitär-Verteilerkasten ein Verschlusspaneel (140) und einen Rand umfasst;
- Der Zwischenraum unter dem Verschlusspaneel (50) so eine Größe aufweist, dass die Anordnung des Verschlusspaneels (140), das zum Elektro-und/oder Sanitär-Verteilerkasten gehört, an dem der Rahmen bestimmt ist, im Gebrauch aufgebracht zu werden, unter dem Verschlusspaneel (50) möglich ist;
- Wobei der Rand des Elektro- und/oder Sanitär-Verteilerkastens eine Form aufweist, die zu der des im Wesentlichen quadratisch geformten Bereichs (13) oder des quadratisch geformten Bereichs (13) komplementär ist, so dass, wenn der Rahmen auf den Rand des Elektro- und/oder Sanitär-Verteilerkastens aufgebracht wird, der seitliche Teil des Randes des Elektro- und/oder Sanitär-Verteilerkastens gegen die vertikale Seite (11') des im Wesentlichen quadratisch geformten Bereichs (13) oder des quadratisch geformten Bereichs (13) des Rahmens und an der horizontalen Seite (6'') des im Wesentlichen quadratisch geformten Bereichs (13) oder des quadratisch geformten Bereichs (13) des Rahmens, der auf dem oberen Teil des Randes des Elektro-und/oder Sanitär-Verteilerkastens liegt, anliegt;
- Und wobei Verbindungsmittel (20, 30) ferner zum abnehmbaren Befestigen des Rahmens an dem Elektro- und/oder Sanitär-Verteilerkasten umfasst sind, wobei die Verbindungsmittel eine oder mehrere Platten (20) umfassen, die mit mindestens einem Loch ausgestattet sind, um ihre Befestigung an dem Rahmen mittels mindestens einer Schraube zu ermöglichen;
- Wobei die Platten mit einer Ausdehnung ausgewählt sind, um zumindest teilweise den quadratisch geformten oder im Wesentlichen quadratisch geformten Bereich (13) zu erreichen, so dass ein überstehender Teil der einen oder mehreren Platten im Gebrauch unter dem Rand des Elektro- und/oder Sanitär-Verteilerkastens gelangt, wodurch im Gebrauch der Rand des Elektro- und/oder Sanitär-Verteilerkastens gegen den quadratisch geformten Bereich (13) oder den im Wesentlichen quadratisch geformten Bereich (13), der eine Funktion einer Anlagefläche hat, befestigt wird.

2. System nach Anspruch 1, wobei die ringförmige Anlagefläche (6) eine solche Form aufweist, dass die Aufbringung der Mittel (130, 130') zum Befestigen des Paneels (140) des Elektro-und/oder Sanitär-Verteilerkastens an dem Elektro-und/oder Sanitär-Verteilerkasten innerhalb des Zwischenraums (60) ermöglicht wird.

3. System nach Anspruch 1 oder 2, wobei die ringförmige Anlagefläche (6), die die zentrale Öffnung (100) begrenzt, eine solche Ausdehnung aufweist, dass, wenn der Rahmen im Gebrauch am Rand des Elektro- und/oder Sanitär-Verteilerkastens aufgebracht wird, für den er bestimmt ist, die Löcher (130) des Elektro-und/oder Sanitär-Verteilerkastens, die zur Aufnahme der Befestigungsschrauben des Abdeckpaneels (140) angeordnet sind, frei sind.

4. System nach einem oder mehreren der vorhergehenden Ansprüche, wobei die Befestigungsmittel (10, 10') mindestens einen Keilblock (10), der an der Anlagefläche (6) angeordnet ist, und einen entsprechenden Keilblock (10') umfassen, der am Paneel in einer solchen Position angeordnet ist, um überlappend zu sein, wenn sie aneinander angebracht sind, wenn das Verschlusspaneel (50) innerhalb des Enthalterahmens aufgebracht ist, wobei vorzugsweise die Keilblöcke (10), die an der Anlagefläche (6) angeordnet sind, auf drei Seiten der Anlagefläche verteilt sind, wobei die vierte Seite frei von diesen Blöcken bleibt.

5. System nach Anspruch 4, wobei die Keilblöcke in Form von Magnetblöcken vorliegen.

6. System nach Anspruch 5, wobei die auf der Anlagefläche (6) angeordneten Blöcke (10) aus magnetischem Material bestehen, während die auf der Anlagefläche (6) angeordneten Blöcke (10') aus metallischem Material, beispielsweise Eisenmaterial, bestehen.

7. System nach einem der Ansprüche 4 bis 6, wobei die Keilblöcke außen mit Velcro^{®}-Material bedeckt sind.

8. System nach Anspruch 1, wobei der Rahmen zwei Rillen (11, 12) umfasst, die voneinander beabstandet sind und entlang der Kontur des Rahmens an einer Seite der Anlagefläche (6) und unterhalb der Anlagefläche verlaufen, wobei der Bereich (13) an der Seite der äußersten Rille (11) angeordnet ist.

9. System nach Anspruch 1, wobei die Platte in der Lage ist, sich in Abhängigkeit vom Befestigungsgrad der Schraube um die Längsachse der Schraube zu drehen, so dass sie in einer Position angeordnet werden kann, die gegen den Rand des Elektro- und/oder Sanitär-Verteilerkastens gelangt, bei der der Elektro-und/oder Sanitär-Verteilerkasten an dem Rahmen befestigt wird, oder in einer Position drehbar ist, die den Elektro- und/oder Sanitär-Verteilerkasten freigibt.

10. System nach Anspruch 1 oder 9, wobei die Platte (200) mit einem gebogenen und elastisch verformbaren Ende (210) geformt ist, um eine elastische zusammensteckbare Verriegelung für den Elektro- und/oder Sanitär-Verteilerkasten zu bilden, wobei vorzugsweise das Ende, das dazu bestimmt ist, am Rand des Elektro- und/oder Sanitär-Verteilerkastens im Gebrauch angebracht zu werden, wie ein V-förmig gefalteter Fortsatz geformt ist, um einen Anbringungshaken zu bilden, der auf den Rand drückt, und so dass dieses V-förmige Ende in der Aufbringungsrichtung des Rahmens zum Rand hinführend des Elektro- und/oder Sanitär-Verteilerkastens einen Vorsteuerpfad ausformt, der sich elastisch verformt, wenn der Rahmen am Rand des Elektro- und/oder Sanitär-Verteilerkastens aufgebracht wird, der über den Rand verläuft und eine zusammensteckbare Verriegelung bewirkt, nachdem er über den Rand verlaufen ist.

11. System nach einem oder mehreren der vorhergehenden Ansprüche, wobei das Paneel (50) ferner einen Hohlraum ausformt, der geeignet ist, das Verschlusspaneel (140) des Elektro- und/oder Sanitär-Verteilerkastens aufzunehmen.

12. System nach einem oder mehreren der vorhergehenden Ansprüche, wobei die ringförmige Anlagefläche eine obere Fläche (260b), auf der das erste Element (10) angeordnet ist, und eine untere Fläche (260a) aufweist, die durch Hobeln erhalten wird und zum Tragen der Abdeckung des Verteilerkastens bestimmt ist.

13. System nach Anspruch 1, wobei der überstehende Teil der Platte unterhalb der horizontalen Seite (6'') des Vorsteuerpfads (13) in der Position positioniert ist, bei der der überstehende Teil im Gebrauch den Rand des Elektro- und/oder Sanitär-Verteilerkastens blockiert.

14. System nach Anspruch 1, wobei die Befestigungsmittel (10, 10') mindestens ein erstes Element (10), das auf der ringförmigen Anlagefläche (6) angeordnet ist, und mindestens ein zweites Element (10') umfassen, das auf dem Verschlusspaneel (50) in einer solchen Position angeordnet ist, dass, wenn das Verschlusspaneel (50) in den Rahmen eingesetzt ist, das zweite Element (10') in Kontakt mit dem ersten Element (10) angeordnet ist, wobei das erste und das zweite Element dazu konfiguriert sind, eine abnehmbare Verbindung zu schaffen, wenn sie miteinander gekoppelt sind, und wobei das erste Element (10) und das zweite Element (10') ferner so konfiguriert sind, dass sie, wenn sie miteinander gekoppelt sind, das Verschlusspaneel (50) um einen vorbestimmten Betrag in Bezug auf die ringförmige Anlagefläche (6) anheben, auf der das Verschlusspaneel in angelehnter Position durch die Befestigungsmittel angeordnet ist, um einen Zwischenraum (60) unter dem Verschlusspaneel (50) zu schaffen.

15. Verfahren zum Einsetzen eines Verteilerkastens in ein Loch einer Wand, umfassend die Schritte zum:
- Bereitstellen eines Systems nach einem oder mehreren der vorhergehenden Ansprüche;
- Aufbringen des Rahmens des Systems auf den Rand des Verteilerkastens des Systems, Einsetzen des Umfangs des oberen Randes des Verteilerkastens in den Umfang, der durch den quadratisch geformten Bereich (13) des Rahmens gebildet ist, und abnehmbares Aufbringen des Verteilerkastens an den Rahmen durch Aufbringung der Platten (20) und relativen Schrauben, so dass der Rahmen befestigt ist und mit dem Verteilerkasten ein Ganzes bildet;
- Einsetzen des Rahmens und des Verteilerkastens in das Loch der Wand, indem der Verteilerkasten in das Loch eingesetzt wird, bis der hintere Teil (19) des Rahmens die Wand berührt.

## Revendications

1. Système comprenant une boîte de service électrique et/ou de plomberie munie d'une ouverture d'accès et d'un ensemble cadre (1, 50) adapté pour être placé sur la boîte de service électrique et/ou de plomberie (110) munie d'une ouverture d'accès, ledit ensemble cadre comprenant :
- Un cadre (1), muni d'une ouverture centrale (100), et un panneau de fermeture (50) configuré pour être appliqué au cadre (1) de manière à fermer ladite ouverture centrale (100) ;
- Le cadre (1) comprenant une surface de butée annulaire (6) qui délimite ladite ouverture centrale (100) et sur laquelle appliquer ledit panneau de fermeture (50) en position inclinée, le cadre comprenant en outre une paroi annulaire (3) qui s'élève de manière sensiblement verticale à partir de ladite surface de butée annulaire (6) de manière à former un cadre de confinement (3, 4, 6') à partir duquel, à l'intérieur, ladite surface de butée annulaire (6) se ramifie radialement et à l'intérieur duquel ledit panneau de fermeture (50) peut être appliqué, de manière amovible, de sorte que ledit panneau de fermeture (50) est placé en position inclinée sur la surface de butée annulaire (6) ;
- Des moyens de fixation (10, 10') pour fixer ledit panneau de fermeture (50) de manière amovible à l'intérieur dudit cadre de confinement (3, 4, 6') ;
- L'ensemble cadre étant structurellement configuré de sorte que, lorsque le panneau de fermeture (50) est appliqué pour fermer ladite ouverture, un espace intermédiaire (60) est formé sous le panneau de fermeture (50) ;
- Le cadre formant une zone sensiblement carrée (13) ou une zone carrée (13) formée d'un côté vertical (11') et d'un côté horizontal (6''), le côté horizontal (6") étant la surface inférieure (6'') de la surface de butée (6), adaptée pour recevoir le bord de ladite boîte de service électrique et/ou de plomberie ;
**Caractérisé en ce que**
- La boîte de service électrique et/ou de plomberie comprend un panneau de fermeture (140) et un bord ;
- L'espace intermédiaire sous le panneau de fermeture (50) a une dimension telle qu'il permet de placer, sous le panneau de fermeture (50), le panneau de fermeture (140) appartenant à la boîte de service électrique et/ou de plomberie sur lequel le cadre est destiné à être appliqué en cours d'utilisation ;
- Le bord de ladite boîte de service électrique et/ou de plomberie ayant une forme complémentaire à celle de ladite zone sensiblement carrée (13) ou de la zone de forme carrée (13), de sorte que, lorsque le cadre est appliqué sur le bord de la boîte de service électrique et/ou de plomberie, la partie latérale du bord de ladite boîte de service électrique et/ou de plomberie vienne en butée contre le côté vertical (11') de la zone sensiblement carrée (13) ou de forme carrée (13) du cadre et contre le côté horizontal (6'') de la zone sensiblement carrée (13) ou de forme carrée (13) du cadre qui repose sur la partie supérieure du bord de la boîte de service électrique et/ou de plomberie ;
- Et des moyens de connexion (20, 30) étant compris en outre pour fixer le cadre à ladite boîte de service électrique et/ou de plomberie de manière amovible, lesdits moyens de connexion comprenant une ou plusieurs plaques (20) munies d'au moins un trou pour permettre leur fixation au cadre à l'aide d'au moins une vis ;
- Les plaques étant choisies avec une extension telle qu'elles atteignent au moins en partie ladite zone de forme carrée ou sensiblement carrée (13), de sorte qu'une partie excédante de ladite ou desdites plaques passe, en cours d'utilisation, sous le bord de ladite boîte de service électrique et/ou de plomberie, fixant ainsi, en cours d'utilisation, ledit bord de ladite boîte de service électrique et/ou de plomberie contre ladite zone carrée (13) ou sensiblement carrée (13) ayant une fonction d'une surface de butée.

2. Système selon la revendication 1, dans lequel ladite surface de butée annulaire (6) a une forme telle qu'elle permet l'application des moyens (130, 130') de fixation du panneau (140) de ladite boîte de service électrique et/ou de plomberie à ladite boîte de service électrique et/ou de plomberie à l'intérieur dudit espace intermédiaire (60).

3. Système selon la revendication 1 ou 2, dans lequel ladite surface de butée annulaire (6) délimitant ladite ouverture centrale (100) a une extension telle que, lorsque le cadre est appliqué en cours d'utilisation sur le bord de la boîte de service électrique et/ou de plomberie auquel il est destiné, les trous (130) de la boîte de service électrique et/ou de plomberie destinés à recevoir les vis de fixation du panneau de couverture (140) sont dégagés.

4. Système, selon l'une ou plusieurs des revendications précédentes, dans lequel lesdits moyens de fixation (10, 10') comprennent au moins un bloc de cale (10) placé sur la surface de butée (6) et un bloc de cale correspondant (10') placé sur le panneau dans une position telle qu'ils se chevauchent lorsqu'ils sont fixés l'un à l'autre lorsque le panneau de fermeture (50) est appliqué à l'intérieur du cadre de confinement, de préférence lesdits blocs de cale (10) placés sur la surface de butée (6) sont répartis sur trois côtés de ladite surface de butée en laissant le quatrième côté libre de ces blocs.

5. Système, selon la revendication 4, dans lequel lesdits blocs de cale se présentent sous la forme de blocs magnétiques.

6. Système selon la revendication 5, dans lequel les blocs (10) placés sur la surface de butée (6) sont en matériau magnétique, tandis que les blocs (10') disposés sur ladite surface de butée (6) sont en matériau métallique, en fer par exemple.

7. Système selon l'une quelconque des revendications 4 à 6, dans lequel lesdits blocs de cale sont recouverts à l'extérieur d'un matériau Velcro^{®}.

8. Système, selon la revendication 1, dans lequel ledit cadre comprend deux couloirs (11, 12), espacés l'un de l'autre, longeant le contour du cadre d'un côté de la surface de butée (6) et en dessous de ladite surface de butée, ladite zone (13) étant disposée du côté du couloir le plus externe (11).

9. Système selon la revendication 1, dans lequel ladite plaque est capable de tourner autour de l'axe longitudinal de la vis en fonction du degré de fixation de la vis de manière à pouvoir être placée dans une position qui va contre le bord de la boîte de service électrique et/ou de plomberie, fixant la boîte de service électrique et/ou de plomberie au cadre, ou pouvant tourner dans une position qui libère ladite boîte de service électrique et/ou de plomberie.

10. Système, selon la revendication 1 ou 9, dans lequel la plaque (200) est façonnée avec une extrémité pliée et élastiquement déformable (210) de manière à former un verrouillage élastique par encliquetage pour la boîte de service électrique et/ou de plomberie, de préférence dans lequel ladite extrémité destinée à être fixée au bord de la boîte de service électrique et/ou de plomberie en cours d'utilisation, est façonnée comme un appendice plié en V, de manière à former un crochet de fixation poussant sur le bord et de manière à ce que, vers la direction d'application du cadre sur le bord de la boîte de service électrique et/ou de plomberie, cette extrémité en forme de V forme une trajectoire pilote se déformant élastiquement lorsque le cadre est appliqué sur le bord de la boîte de service électrique et/ou de plomberie en passant sur le bord et en provoquant un verrouillage par encliquetage après avoir passé le bord.

11. Système, selon l'une ou plusieurs des revendications précédentes, dans lequel ledit panneau (50) forme en outre une cavité adaptée pour loger le panneau de fermeture (140) de la boîte de service électrique et/ou de plomberie.

12. Système, selon l'une ou plusieurs des revendications précédentes, dans lequel la surface de butée annulaire a une surface supérieure (260b) sur laquelle le premier élément (10) est placé et une surface inférieure (260a) obtenue par rabotage et destinée au support de la couverture de la boîte de service.

13. Système, selon la revendication 1, dans lequel ladite partie excédante de la plaque est positionnée sous le côté horizontal (6'') de ladite trajectoire pilote (13) dans ladite position où la partie excédante bloque en cours d'utilisation le bord de ladite boîte de service électrique et/ou de plomberie.

14. Système selon la revendication 1, dans lequel lesdits moyens de fixation (10, 10') comprennent au moins un premier élément (10) disposé sur la surface de butée annulaire (6) et au moins un second élément (10') placé sur le panneau de fermeture (50) dans une position telle que, lorsque ledit panneau de fermeture (50) est inséré dans ledit cadre, le second élément (10') est placé en contact avec le premier élément (10), lesdits premier et second éléments étant configurés pour créer une connexion détachable lorsqu'ils sont couplés l'un à l'autre et, dans lequel, lesdits premier élément (10) et second élément (10') sont en outre configurés pour que, lorsqu'ils sont couplés l'un à l'autre, ils soulèvent le panneau de fermeture (50) d'une quantité prédéterminée par rapport à la surface de butée annulaire (6) sur laquelle le panneau de fermeture est placé en position inclinée à travers desdits moyens de fixation de manière à créer un espace intermédiaire (60) sous le panneau de fermeture (50).

15. Procédé d'insertion d'une boîte de service dans un trou d'une paroi comprenant les phases suivantes :
- Fournir un système selon l'une ou plusieurs des revendications précédentes ;
- Appliquer le cadre dudit système sur le bord de la boîte de service dudit système en insérant le périmètre du bord supérieur de la boîte de service dans le périmètre formé par la zone carrée (13) du cadre et appliquer la boîte de service au cadre de manière amovible par l'application des plaques (20) et des vis correspondantes de manière à ce que le cadre soit fixé et forme un tout avec la boîte de service ;
- Insérer le cadre et la boîte de service dans le trou de la paroi en insérant la boîte de service dans le trou jusqu'à ce que la partie arrière (19) du cadre touche la paroi.
